# EUROPEAN PATENT APPLICATION

(11) **EP 4 671 772 A2**
(43) Date of publication of application: **31.12.2025**
(21) Application number: 25215513.0
(22) Date of filing: 14.03.2024
(51) Int. Cl.: G01N 35/10

(54) **FLUID DISPENSER FOR SUPPLYING A FLUID TO A MICROFLUIDIC SYSTEM AND FLUID CONTAINER**

(62) Divisional of application: 24163546.5
(71) Applicant: Leica Microsystems CMS GmbH, 35578 Wetzlar (DE)
(72) Inventor: Christ, Stefan, 35578 Wetzlar (DE)
(74) Representative: Schaumburg und Partner Patentanwälte mbB

(57) **Abstract**

A fluid dispenser (100, 300, 400) is configured to supply a fluid to a microfluidic system (102) and comprises a sample carrier position (200) configured to receive a sample carrier (104). The sample carrier (104) is configured to receive a microscopic specimen (202) and comprises the microfluidic system (102) having an injection port (112) configured to receive fluids intended to interact with the microscopic specimen (202). The fluid dispenser (100, 300, 400) also comprises a microfluidic mixing chamber (120) having a first input (122), a second input (124), and an output (126). The microfluidic mixing chamber (120) is configured to mix fluids provided via the first and second inputs (122, 124) and to output (126) the mixed fluids via the output (126). The fluid dispenser (100, 300, 400) further comprises a first port (136) configured to receive a fluid line (134) for providing a first fluid to the first input (122) of the microfluidic mixing chamber (120), a second port (140) configured to receive a fluid container (138) containing a second fluid to be mixed with the first fluid, and to provide the second fluid to the second input (124) of the microfluidic mixing chamber (120), and an adapter (130) configured to connect the output (126) of the microfluidic mixing chamber (120) to the injection port (112) of the sample carrier (104).

## Description

### Technical fields

The invention relates to a fluid dispenser configured to supply a fluid to a microfluidic system. The invention further relates to a fluid container configured to be used with the fluid dispenser.

### Background

In particular in the field of spatial omics, biological specimens are subjected to multiple cycles of manipulation and treatment with various reagents, in order to study various biological processes. The reagents are for example probes, antibodies, or chemicals such as hydrogen peroxide. In particular, when the reagents comprise fluorophores, the reagents are also called markers. In order to observe the reaction of the specimens to the treatment, the specimens are imaged either during or after they have been treated with the reagents.

A typical experimental setup comprises a dedicated microscope for imaging the specimen. The staining and washing steps required are typically performed outside the microscope, either manually on a work bench or with an automated system such as an immunohistochemistry (IHC) stainer. Manually handling the specimens is time consuming and considerably reduces the throughput of an experiment. Integrated solutions exist combining both a microscope and a stainer that reduce the time needed to handle the specimens.

The main disadvantage of the typical experimental setup described above is that many antibody stains and, in particular, many chemical probes, for example the probes used in a fluorescence in situ hybridization (FISH) experiment, require large amounts of fluid during the washing cycles, but very little volume during the actual staining cycle, for example when the antibody cocktail is applied. Typical injection systems use the dip and dunk method, or simply pipet the fluids onto the surface of the specimen. However, all known injection systems suffer from the same problem of not being able to handle highly variable volume sizes well. In particular, the complete removal of small volumes is very challenging as it is currently time consuming and costly, requiring, for example, repeated rinsing with excess wash buffer. Also, handling individual glass slides is a very challenging task for a robotic system, as glass slides have a wide tolerance range. Glass dust is also a major problem for high throughput systems. Conversely, batch processing does not scale as easily. The metal frame holders typically used in batch processing are quite large and take up a lot of space inside and outside of pipetting systems when not fully loaded with slides.

### Summary

It is an object to provide a fluid dispenser configured to supply a fluid to a microfluidic system, and a fluid container configured to be used with the fluid dispenser that facilitate an easy to use, efficient, and automated specimen preparation.

The aforementioned object is achieved by the subject-matter of the independent claims. Advantageous embodiments are defined in the dependent claims and the following description.

The proposed fluid dispenser is configured to supply a fluid to a microfluidic system and comprises a sample carrier position configured to receive a sample carrier. The sample carrier is configured to receive a microscopic specimen and comprises the microfluidic system having an injection port configured to receive fluids intended to interact with the microscopic specimen. The fluid dispenser also comprises a microfluidic mixing chamber having a first input, a second input, and an output. The microfluidic mixing chamber is configured to mix fluids provided via the first and second inputs and to output the mixed fluids via the output. The fluid dispenser further comprises a first port configured to receive a fluid line for providing a first fluid to the first input of the microfluidic mixing chamber, a second port configured to receive a fluid container containing a second fluid to be mixed with the first fluid, and to provide the second fluid to the second input of the microfluidic mixing chamber, and an adapter configured to connect the output of the microfluidic mixing chamber to the injection port of the sample carrier.

The proposed fluid dispenser forms in integrated system that allows the user to prepare a mixture of the first and second fluids, and to directly apply this mixture to the specimen. The first fluid is provided via the fluid line and may be a solvent or a buffer. The second fluid is provided via the replaceable fluid container and may be a reagent, for example a chemical like hydrogen peroxide, a mixture of antibodies or a similar preparation of fluids. Compared to the amount of first fluid that can be provided via the fluid line, the amount of second fluid that is stored in the fluid container may be miniscule, for example just a few microliters provided in the fluid container versus several milliliters provided via the fluid line. The first fluid enters the microfluidic mixing chamber via the first port and the first input. The second fluid enters the microfluidic mixing chamber via the second port and the second input. Inside the microfluidic mixing chamber, the first and second fluids are mixed before the mixture exits the microfluidic mixing chamber via the output. The output is connected to the adapter, which connects the output of the microfluidic mixing chamber to the injection port of the sample carrier which forms part of the microfluidic system. Via the injection port and the microfluidic system of the sample carrier, the mixture is then applied to the specimen.

The mixture of the first and second fluids is prepared just before the mixture is injected into the sample carrier. This is especially useful for chemicals or probes that deteriorate quickly after being diluted and/or mixed with a buffer solution, for example hydrogen peroxide which decomposes within less than a minute after being mixed. Thus, the proposed fluid dispenser allows an efficient automated specimen preparation. Providing the second fluid via the fluid container makes it possible, for example, to provide the correct amount and/or concentration of the second fluid for a particular experiment without a user needing to pipet or otherwise measure out the correct amount during an experiment. This makes the proposed fluid dispenser also very easy to use. The fluid container may also be a consumable, for example a little sealed vial. Providing the fluid container as a one-use item prevents carryover and cross contamination.

In an embodiment the fluid dispenser comprises a source of pressurized fluid, and a pressure line connected to the source of pressurized fluid. The pressure line is configured to be connected to a pressure port of the fluid container to provide the fluid container with the pressurized fluid for discharging the second fluid from the fluid container via the second port into the microfluidic mixing chamber. The pressurized fluid displaces the second fluid from the fluid container. Thereby, the second fluid is itself pressurized and forced into the microfluidic mixing chamber via the second port. By forcing the second fluid out of the fluid container, the fluid container is quickly emptied, which speeds up the mixing process. Further, pressurizing the second fluid also greatly aids the mixing of the first and second fluids itself, ensuring that the first and second fluids are properly mixed. The pressurized fluid may be a liquid or a gas. Preferably, the pressurized fluid is air. However, the pressurized fluid may also be a viscous liquid. Additionally, a small membrane may be provided between the second fluid and the pressurized fluid, preventing the second fluid and the pressurized fluid from mixing. In such an embodiment, a watery solution may be used as the pressurized fluid.

In another embodiment the fluid dispenser comprises a temperature control unit configured to heat and/or cool the fluid container when the fluid container is received in the second port. The temperature control unit controls the temperature of the second fluid stored in the fluid container received in the second port. In particular antibodies and a lot of chemical probes, for example probes used in FISH experiments, are very sensitive to temperature. They have very specific temperature requirements and may decompose when stored at the wrong temperature. By storing the second fluid in a temperature-controlled environment, waste may be decreased. Temperature is also one of the key factors that determine the specificity and the efficiency of a staining process. Temperature is further a determining factor in the efficiency of the washing step as well as the overall speed of a staining and washing cycle. Thus, by allowing a fine control of the temperature of the second fluid, in particular as a function of time, the fluid dispenser allows a very precise control of the annealing step, thereby increasing the overall efficiency of a staining and washing cycle.

In another embodiment the fluid dispenser comprises a bubble trap configured to remove gas bubbles from the first fluid and/or the second fluid. The bubble trap significantly reduces the risk of introducing air bubbles into the microfluidic system of the sample carrier, thereby increasing the precision and reliability of fluid flow control. This is critical to ensuring consistent experimental conditions and reproducibility of results in applications that require precise manipulation of minute volumes of the second fluid in particular. More than one bubble trap may be provided. Each bubble trap may be part of the microfluidic mixing chamber and may be arranged between the first port and the first input or between the second port and the second input.

In another embodiment the fluid dispenser comprises a degasser configured to remove dissolved gasses from the first fluid and/or the second fluid. Providing the fluid dispenser with the degasser efficiently removes dissolved gases from the first fluid and/or the second fluid. This prevents the formation of gas bubbles that can clog microfluidic channels of the sample carrier and disrupt fluid flow, thereby maintaining the accuracy and consistency of microfluidic operations. More than one degasser may be provided. Each degasser may be part of the microfluidic mixing chamber and may be arranged between the first port and the first input or between the second port and the second input.

In another embodiment the fluid dispenser comprises at least one storage position configured to receive an additional fluid container. The fluid dispenser may further comprise a fluid container positioning unit configured to automatically replace the fluid container received at the second port by one of the additional fluid containers. This embodiment allows multiple different reagents to be automatically applied to the specimen, for example to automate a staining and washing cycle. The different reagents are stored in the different fluid containers. When a specific reagent is needed, the corresponding fluid container is placed in the second port by the fluid container positioning unit. Once the fluid container currently arranged in the second port is emptied, the fluid container may be removed by the fluid container positioning unit.

In another embodiment the fluid container positioning unit comprises a body having at least two of the storage positions. The body may be movable along at least one direction for alternately positioning the fluid containers received in the storage positions at the second port. In this embodiment, the movable body forms part of the fluid container positioning unit. By moving the body, the fluid containers can be alternately positioned at the second port. This is a mechanically very simple embodiment of the fluid container positioning unit. The body may be a frame-like structure, allowing the fluid containers to be stored in a grid-like arrangement. This makes it very easy to load the fluid containers into the fluid dispenser.

In another embodiment the fluid dispenser comprises a temperature control unit configured to heat and/or cool at least one of the fluid containers received in the storage positions. The temperature control unit controls the temperature of the second fluids stored in the fluid containers received in the storage positions. As has been stated above, many reagents are sensitive to temperature, requiring a specific storage temperature or they will degrade. This embodiment allows the storage of such temperature-sensitive reagents in the storage positions.

In another embodiment the fluid dispenser comprises an opening creation unit configured to create an opening in the fluid container received at the second port for discharging the second fluid. The opening is created such that the second fluid can exit the fluid container via the second port. In this embodiment, the fluid container may be provided as a hermitically sealed unit. The opening in the fluid container may be created just before the second fluid is needed. This further protects the second fluid stored therein from the environment, preventing degradation and waste. The opening creation unit is preferably arranged at the second port. In an example, the opening creation unit comprises a piercing element configured to pierce the fluid container received at the second port to create the opening for discharging the second fluid. Alternatively, the opening creation unit comprises a needle configured to pierce a seal of the fluid container received at the second port to create the opening for discharging the second fluid. In such an embodiment, the second fluid is discharged via the interior channel, also called the lumen, of the needle. In another alternative, the opening creation unit comprises a cutting element configured to cut the fluid container to create the opening for discharging the second fluid. In such an embodiment, the fluid container may comprise a protrusion configured to be cut by the cutting element.

In another embodiment the fluid dispenser is configured to move the adapter and/or the sample carrier arranged in the sample carrier position to arrange the adapter at the injection port of said sample carrier. In this embodiment, the adapter is moved to the injection port of the sample carrier. For example, a number of sample carriers, each comprising an injection port, can be served by the fluid dispenser in this way. Alternatively, the sample carrier is moved to the adapter. The fluid dispenser may be fed with a number of sample carriers, each comprising an injection port, for example by a robotic arm or a similar device. Both alternatives make it possible to serve a large number of sample carriers with the same fluid dispenser, thereby greatly increasing the throughput of an experiment.

In another embodiment the microfluidic mixing chamber comprises a mixing channel, a first inlet channel connecting the first port to the mixing channel, and a second inlet channel connecting the second port to the mixing channel. The mixing channel preferably comprises at least one section where the mixing channel is formed as a serpentine channel. The mixing channel is a microfluidic element that facilitates the mixing of the first and second fluids introduced via the first and second inputs, respectively. Microfluidic applications typically deal with very small fluid volumes. In these small volumes, the fluids behave very viscous and do not mix very well by themselves. By forcing the first and second fluids through the serpentine channel, the two fluids are forced to mix, ensuring an even mixture of the fluids.

In another embodiment the fluid line is pressurized. Providing the first fluid to the microfluidic mixing chamber under pressure facilitates a better mixing of the first and second fluids in the microfluidic mixing chamber.

In another embodiment the second port comprises a screw thread configured to engage with a complementary threading of the fluid container for attaching the fluid container to the fluid dispenser. The screw thread is a very simple way to securely attach the fluid container to the fluid dispenser.

The invention further relates to a fluid container configured to be used with the fluid dispenser described above. The fluid container has the same advantages as the fluid dispenser described above. In particular, the fluid container may be supplemented with features described in this document in connection with the fluid dispenser. Furthermore, the fluid dispenser described above may be supplemented with features described in this document in connection with the fluid container.

In an embodiment the fluid container comprises a ventilation port and/or a pressure relief valve configured to let gases escape from the inside of the fluid container. Providing a ventilation port and/or a pressure relief valve on the fluid container prevents the build-up of gasses, for example oxygen that is generated when hydrogen peroxide decomposes. The build-up of gases can destroy the fluid container, spilling the fluid inside and rendering the fluid unusable. In the case of hydrogen peroxide decomposition, the build-up of oxygen can also be a fire hazard.

In another embodiment the fluid container is made from an opaque material and/or a light-protective material. Making the fluid container from an opaque material and/or a light-protective material protects the fluid stored within the fluid container from exposure to light, in particular sun light, and thereby prevents light-sensitive fluids from degrading over time. For example, hydrogen peroxide is sensitive to light and decomposes when exposed to light even for a short period of time.

In another embodiment the fluid container is made from a chemically resistant material and/or a material that is adapted to withstand temperatures as low as -80°C and/or as high as 100°C while maintaining structural integrity and functional properties. Making the fluid container from a chemically resistant material ensures the purity of the second fluid stored therein by preventing reactions between the fluid container and the second fluid, thus preventing contamination or degradation over time. Antibodies used for staining biological specimens are typically stored at temperatures around -80 C. Thus, adapting the fluid container to withstand temperatures as low as -80°C allows the fluid container to be used for storing antibodies and in applications utilizing antibodies. In molecular biology DNA is typically stained by inserting a dye molecule between the stacked base pairs of the DNA double helix in a process called intercalation. Some staining protocols may involve thermal cycles or heating steps, requiring the DNA to be heated up to +98°C. Thus, adapting the fluid container to withstand temperatures as high as +98°C allows the fluid container to be used in such DNA staining protocols.

### Short Description of the Figures

Hereinafter, specific embodiments are described referring to the drawings, wherein:
- Figure 1: is a schematic side view of a fluid dispenser according to an embodiment;
- Figure 2: is a schematic top view of the fluid dispenser according to Figure 1;
- Figure 3: is a schematic side view of a fluid dispenser according to another embodiment comprising a temperature control unit;
- Figure 4: a schematic side view of a fluid dispenser according to another embodiment comprising a fluid container positioning unit;
- Figure 5: is a schematic view of a degasser that may be part of the fluid dispenser according to any of the Figures 1 to 4; and
- Figure 6: is a schematic view of a bubble trap that may be part of the fluid dispenser according to any of the Figures 1 to 4.

### Detailed Description

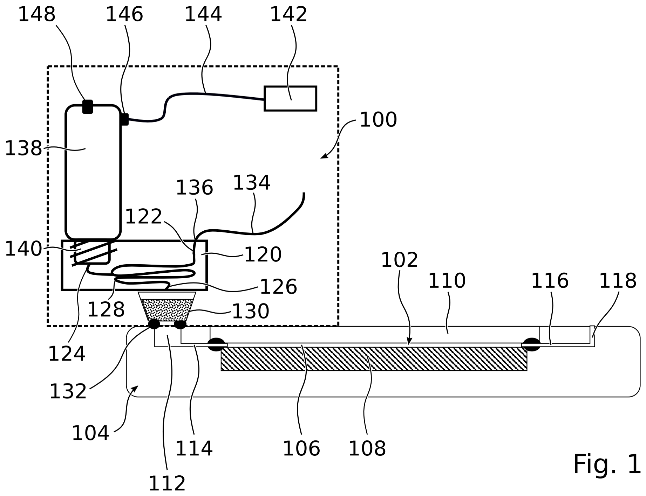

Figure 1 is a schematic side view of a fluid dispenser 100 according to an embodiment. The fluid dispenser 100 is configured to supply a fluid to a microfluidic system 102 of a sample carrier 104.

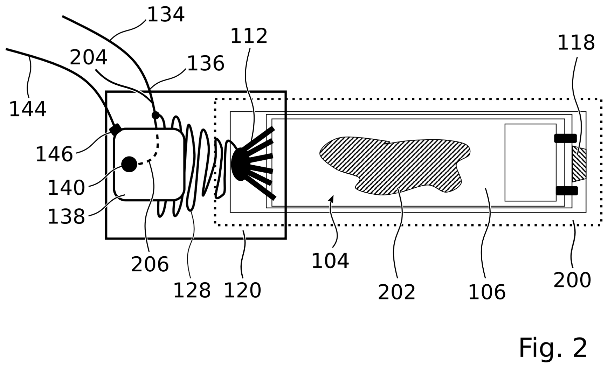

The sample carrier 104 is arranged in a sample carrier position 200 (c.f. Figure 2) below the fluid dispenser 100 and shown in a sectional view in Figure 1. The cut runs along the length of the sample carrier 104, i.e. from left to right in Figure 1. The sample carrier 104 comprises a sample receiving compartment 106 configured to receive a specimen 202 (c.f. Figure 2). In the present embodiment, the sample receiving compartment 106 is configured to receive the specimen 202, in particular a biological specimen 202, prepared on a microscope slide 108. A removable lid 110 is arranged atop the microscope slid 110e 108 covering the specimen 202 from above. The lid 110 may be transparent, allowing a user to observe the specimen 202 from above and to image the specimen 202 through the lid 110.

The microfluidic system 102 of the sample carrier 104 exemplary comprises an injection port 112, a first fluidics channel 114, a second fluidics channel 116, and a venting port 118. The injection port 112 and the venting port 118 are exemplary arranged on opposite sides of the sample receiving compartment 106. The injection port 112 is arranged to the left of the sample receiving compartment 106 in Figure 1 and connected to the sample receiving compartment 106 by the first fluidics channel 114. The venting port 118 is arranged to the right of the sample receiving compartment 106 in Figure 1 and connected to the sample receiving compartment 106 by the second fluidics channel 116. Via the injection port 112, various fluids such as reagents or washing buffers may be introduced into the sample receiving compartment 106 where they can interact with the specimen 202 arranged therein. Any liquid or gas already inside the sample receiving compartment 106 may escape through the venting port 118.

The fluid dispenser 100 comprises a microfluidic mixing chamber 120 having a first input 122, a second input 124, and an output 126. The microfluidic mixing chamber 120 is configured to mix fluids provided via the first and second inputs 122, 124 and to output the mixed fluids via the output 126. For this purpose, the mixing chamber 120 comprises a mixing channel 128 arranged between the first and second inputs 122, 124 and the output 126. The mixing channel 128 is described in more detail below with reference to Figure 2.

The output 126 of the mixing channel 128 is connected to an adapter 130 of the fluid dispenser 100 which is configured to be connectable to the injection port 112 of the sample carrier 104. In the present embodiment, the adapter 130 exemplary comprises a seal 132 formed as an O-ring around a discharge opening of the adapter 130. The seal 132 ensures a leak-proof connection with the injection port 112 and compensates for mechanical tolerances within the connection.

The first fluid may be a solvent or a buffer and is provided via a fluid line 134. By providing the first fluid via the dedicated fluid line 134, large quantities of the first fluid may be provided, for example up to several milliliters. The fluid line 134 can be attached to the fluid dispenser 100 at a first port 136 which is connected to the first input 122 of the microfluidic mixing chamber 120. Thereby, the first fluid is provided to the microfluidic mixing chamber 120.

The second fluid is the reagent that is to be applied to the specimen 202, for example an antibody cocktail, a dye, or a chemical such as hydrogen peroxide. Contrary to the first fluid, only a small amount of the second fluid is needed, typically in the range of a few microliters. Therefore, the second fluid is provided via a dedicated fluid container 138. The fluid container 138 can be attached to the fluid dispenser 100 at a second port 140 which is connected to the second input 124 of the microfluidic mixing chamber 120. The second port 140 is exemplary shown as a screw thread which is engaged by a complementary threat of the fluid container 138 to attach the fluid container 138 to the fluid dispenser 100. In the present embodiment, the fluid dispenser 100 comprises a source 142 of pressurized fluid, for example pressurized air. A pressure line 144 connects the source 142 of pressurized fluid to a pressure port 146 of the fluid container 138. The pressurized fluid can be introduced into the fluid container 138 to force the second fluid out of the fluid container 138 via the second port 140, thereby providing the second fluid to the second input 124 of the microfluidic mixing chamber 120.

The fluid container 138 may be provided with a ventilation port 148 allowing build up gasses to escape, for example oxygen from hydrogen peroxide decomposition. Alternatively, or additionally, a pressure relief valve may be provided at the same location. To prevent the degradation of the second fluid stored therein, the fluid container 138 may be made from a chemically resistant material and/or from a light-protective material, for example a chemically inert, black plastic. In addition to being stable at room temperature, the fluid container 138 may be made from a material that is stable at temperatures as low as -80°C, allowing the storage of antibodies, and/or as high as 100°C, allowing the fluid container 138 to be used in certain DNA staining protocols.

Figure 2 is a schematic top view of the fluid dispenser 100 according to Figure 1. Figure 2 also shows the sample carrier position 200 and the specimen 202 in the sample receiving compartment 106 of the sample carrier 104.

As can be seen in Figure 2, in the present embodiment, the microfluidic mixing chamber 120 comprises a first inlet channel 204, and a second inlet channel 206 which is shown in Figure 2 as a partially dashed line since it is partially covered by the fluid container 138. The first inlet channel 204 connects the first port 136 to the mixing channel 128, and the second inlet channel 206 connects the second port 140 to the mixing channel 128.

In the present embodiment, the mixing channel 128 comprises a serpentine channel comprising multiple bends. The bends elongate the path the first and second fluids travel through the microfluidic mixing chamber 120, thereby increasing the interaction between them. The increased path length and the repetitive directional changes also induce chaotic flow patterns, improving the homogeneity of the mixed fluid without the need for external agitation.

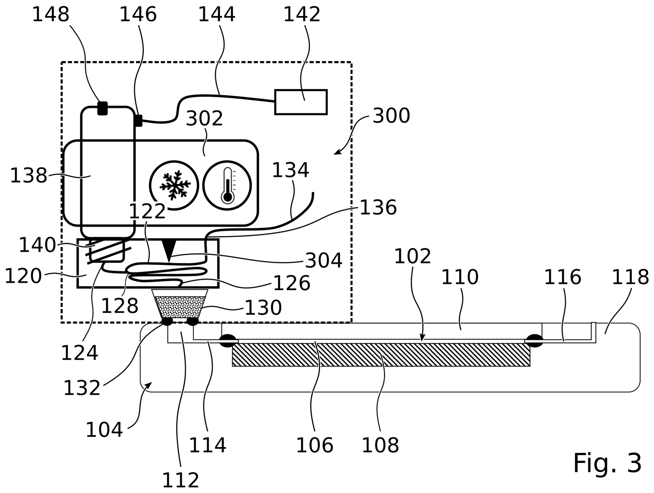

Figure 3 is a schematic side view of a fluid dispenser 300 according to another embodiment.

The fluid dispenser 300 according to Figure 3 is distinguished from the fluid dispenser 100 according to Figure 1 in having a temperature control unit 302. The temperature control unit 302 is exemplary arranged above the microfluidic mixing chamber 120 and configured to control the temperature of the fluid container 138 currently received in the second port 140. For controlling the temperature, the temperature control unit 302 may comprise heating and/or cooling elements, such as electric heating elements and Peltier elements. These heating and/or cooling elements are preferably arranged close to the fluid container 138. The temperature control unit 302 may further comprise insulation arranged around the fluid container 138. Using the temperature control unit 302, a user may very precisely control the temperature of the second fluid stored in the fluid container 138.

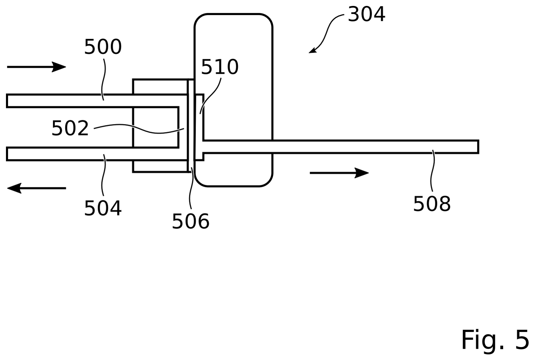

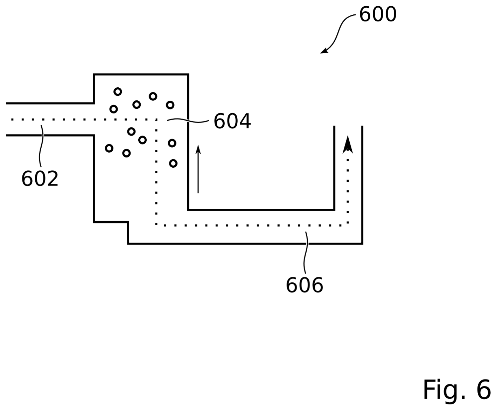

The fluid dispenser 300 according to Figure 3 is further distinguished from the fluid dispenser 300 according to Figure 1 in exemplary comprising a degasser 304 arranged between the first port 136 and the first input 122 of the microfluidic mixing chamber 120. The degasser 304 is configured to remove dissolved gasses from the first fluid before the first fluid enters the microfluidic mixing chamber 120. Alternatively, a bubble trap 600 (c.f. Figure 6) may be provided that is configured to remove gas bubbles trapped in the first fluid. The degasser 304 and the bubble trap 600 are described in more detail below with reference to Figure 5 and 6, respectively. A degasser 304 or a bubble trap 600 may also be provided between the second port 140 and the second input 124 of the microfluidic mixing chamber 120 to remove dissolved gassed and trapped bubbles, respectively, from the second fluid, or between the output 126 of the microfluidic mixing chamber 120 and the adapter 130 to remove dissolved gassed and trapped bubbles, respectively, from the mixed fluid.

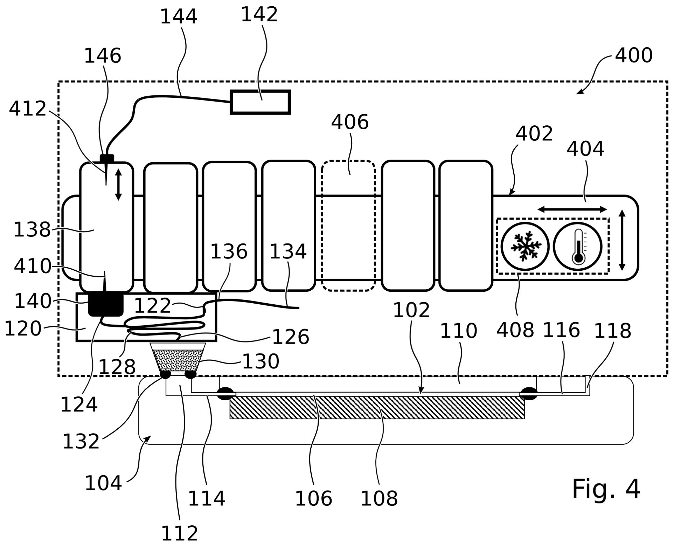

Figure 4 is a schematic side view of a fluid dispenser 400 according to another embodiment.

The fluid dispenser 100 according to Figure 4 is distinguished from the fluid dispenser 400 according to Figure 1 in having a fluid container positioning unit 402. The fluid container positioning unit 402 comprises a body 404 which forms several storage positions 406. Each storage position 406 is configured to receive a fluid container 138. Only exemplary, the body 404 is formed as a grid-like shelve in which the fluid containers 138 are inserted from the top. The body 404 is moveable from left to right in Figure 4 as well as up and down in Figure 4 as indicated by two arrows in Figure 4. Adaptationally, the body 404 may be moveable in a direction perpendicular to the image plane of Figure 4. The moveable body 404 allows the fluid container positioning unit 402 to alternately position one of the fluid containers 138 received by the body 404 in the second port 140. Thereby, the second fluid stored in the fluid container 138 can be discharged into the microfluidic mixing chamber 120. The body 404 further comprises a temperature control unit 408 configured to control the temperature of the fluid containers 138 received in the storage positions 406. The temperature control unit 408 may be configured to heat and/or cool the fluid containers 138, for example using electric heating elements and/or Peltier elements. The temperature control unit 408 may further comprise insulation arranged around the storage positions 406.

The fluid dispenser 400 according to Figure 4 also comprises an opening creation unit 410 arranged at the second port 140. The opening creation unit 410 is configured to create an opening in the fluid container 138 received at the second port 140 through which the second fluid can be discharged into the microfluidic mixing chamber 120. This allows the fluid container 138 to be sealed after it has been filled with the second fluid, and to remain sealed until the second fluid is needed in an experiment. In the present embodiment, the opening creation unit 410 comprises a hollow needle that is configured to be inserted into the fluid container 138 from below, thereby creating the opening. The second fluid is discharged via the lumen of the hollow needle into the second port 140.

In the present embodiment, the fluid dispenser 400 further comprises another hollow needle 412 arranged at one end of the pressure line 144 above the second port 140. The hollow needle 412 can be moved up and down in order to puncture the fluid container 138 currently arranged at the second port 140 from above. Through the lumen of the hollow needle 412 and the puncture created by the hollow needle 412 the pressurized fluid may be inserted into the fluid container 138 in order to replace the second fluid, thereby discharging it.

Figure 5 is a schematic view of the degasser 304 that may be part of the fluid dispenser 100, 300, 400 according to any of the Figures 1 to 4.

The degasser 304 may be arranged between the first port 136 and the first input 122 of the microfluidic mixing chamber 120, for example on the first inlet channel 204. In such a configuration, the degasser 304 removes dissolved gasses from the first fluid before the first fluid is mixed with the second fluid. In an alternative, the degasser 304 is arranged between the second port 140 and the second input 124 of the microfluidic mixing chamber 120, for example on the second inlet channel 206. In such a configuration, the degasser 304 removes dissolved gasses from the second fluid before the first and second fluids are mixed. In another alternative, the degasser 304 is arranged between the output 126 of the microfluidic mixing chamber 120 and the adapter 130, removing dissolved gasses from the mixed fluid before the mixed fluid is introduced into the microfluidic system 102. More than the one degasser 304 may be provided, each degasser 304 being arranged at a different position.

The degasser 304 comprises an inlet channel 500, a degassing channel 502, and an outlet channel 504. The fluid to be degassed enters the degasser 304 via the inlet channel 500, is directed through the degassing channel 502, and exits the degasser 304 via the outlet channel 504. The degassing channel 502 comprises a semipermeable membrane 506, that allows the passage of gases out of the fluid while preventing the fluid itself from escaping. A vacuum line 508 may be attached to the degasser 304 to create a partial vacuum in a chamber 510 that is arranged on the side of the semipermeable membrane 506 opposite the degassing channel 502. Using the vacuum line 508 a partial vacuum may be created in the chamber 510, thereby a pressure differential is created that removes the dissolved gas from the fluid by drawing gas molecules out of the fluid through the semipermeable membrane 506.

Figure 6 is a schematic view of a bubble trap 600 that may be part of the fluid dispenser 100 according to any of the Figures 1 to 4.

The bubble trap 600 may be arranged at any of the positions the degasser 304 described above with reference to Figure 5 may be arranged, thereby removing trapped bubbles from the first fluid, the second fluid or the mixed fluid. More than the one bubble trap 600 may be provided, each bubble trap 600 being arranged at a different position.

The degasser 304 comprises an inlet channel 602, a bubble chamber 604, and an outlet channel 606. The fluid from which the bubbles are to be removed enters the bubble trap 600 via the inlet channel 602 and is directed into the bubble chamber 604. The outlet channel 606 is connected to the bubble chamber 604 but arranged lower than the inlet channel 602. The bubble chamber 604 has a larger diameter than the inlet channel 602, slowing the fluid stream down. This allows the bubbles to rise and to be separated from the fluid in the bubble chamber 604 due to differences in buoyancy before the fluid exits the bubble chamber 604 through the outlet channel 606.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Fluid dispenser
- 102: Microfluidic system
- 104: Sample carrier
- 106: Sample receiving compartment
- 108: Microscope slide
- 110: Lid
- 112: Injection port
- 114, 116: Fluidics channel
- 118: Venting port
- 120: Microfluidic mixing chamber
- 122, 124: Input
- 126: Output
- 128: Mixing channel
- 130: Adapter
- 132: Seal
- 134: Fluid line
- 136: Port
- 138: Fluid container
- 140: Port
- 142: Source
- 144: Pressure line
- 146: Port
- 148: Ventilation port
- 200: Sample carrier position
- 202: Specimen
- 204, 206: Inlet channel
- 300: Fluid dispenser
- 302: Temperature control unit
- 304: Degasser
- 400: Fluid dispenser
- 402: Fluid container positioning unit
- 404: Body
- 406: Storage position
- 408: Temperature control unit
- 410: Opening creation unit
- 412: Hollow needle
- 500, 502, 504: Channel
- 506: Membrane
- 508: Vacuum line
- 510: Chamber
- 600: Bubble trap
- 602: Channel
- 604: Chamber
- 606: Channel

## Claims

1. Fluid dispenser (100, 300, 400) configured to supply a fluid to a microfluidic system (102), comprising
a sample carrier position (200) configured to receive a sample carrier (104), the sample carrier (104) being configured to receive a microscopic specimen (202) and comprises the microfluidic system (102) having an injection port (112) configured to receive fluids intended to interact with the microscopic specimen (202);
a first input (122), a second input (124), and an output (126);
a first port (136) configured to receive a fluid line (134) for providing a first fluid to the first input (122);
a second port (140) configured to receive a fluid container (138) containing a second fluid, and to provide the second fluid to the second input (124); and
an adapter (130) configured to connect the output (126) to the injection port (112) of the sample carrier (104),
wherein the fluid dispenser (100, 300, 400) further comprises a bubble trap (600) configured to remove gas bubbles from the first fluid and/or the second fluid and/or a degasser (304) configured to remove dissolved gasses from the first fluid and/or the second fluid.

2. Fluid dispenser (100, 300, 400) according to claim 1, comprising a source (142) of pressurized fluid, and a pressure line (144) connected to the source (142) of pressurized fluid, wherein the pressure line (144) is configured to be connected to a pressure port (146) of the fluid container (138) to provide the fluid container (138) with the pressurized fluid for discharging the second fluid from the fluid container (138) via the second port (140).

3. Fluid dispenser (300) according to claim 1 or 2, comprising a temperature control unit (302) configured to heat and/or cool the fluid container (138) when the fluid container (138) is received in the second port (140).

4. Fluid dispenser (400) according to any one of the preceding claims, comprising at least one storage position (406) configured to receive an additional fluid container (138), and wherein the fluid dispenser (400) comprises a fluid container positioning unit (402) configured to automatically replace the fluid container (138) received at the second port (140) by one of the additional fluid containers (138).

5. Fluid dispenser (400) according to claim 4, wherein the fluid container positioning unit (402) comprises a body (404) having at least two of the storage positions (406), and wherein the body (404) is movable along at least one direction for alternately positioning the fluid containers (138) received in the storage positions (406) at the second port (140).

6. Fluid dispenser (400) according to claim 4 or 5, comprising a temperature control unit (408) configured to heat and/or cool at least one of the fluid containers (138) received in the storage positions (406).

7. Fluid dispenser (400) according to any one of the preceding claims, comprising an opening creation unit (410) configured to create an opening in the fluid container (138) received at the second port (140) for discharging the second fluid.

8. Fluid dispenser (100, 300, 400) according to any one of the preceding claims, wherein the fluid dispenser (100, 300, 400) is configured to move the adapter (130) and/or the sample carrier (104) arranged in the sample carrier position (200) to arrange the adapter (130) at the injection port (112) of said sample carrier (104).

9. A fluid container (138) configured to be used with the fluid dispenser (100, 300, 400) according to any one of the preceding claims.

10. Fluid container (138) according to claim 9, wherein the fluid container (138) comprises a ventilation port (148) and/or a pressure relief valve configured to let gases escape from the inside of the fluid container (138).

11. Fluid container (138) according to claim 9 or 10, wherein the fluid container (138) is made from an opaque material and/or a light-protective material.

12. Fluid container (138) according to any one of the claims 9 to 11, wherein the fluid container (138) is made from a chemically resistant material and/or a material that is adapted to withstand temperatures as low as -80°C and/or as high as 100°C while maintaining structural integrity and functional properties.
